# EUROPEAN PATENT APPLICATION

(11) **EP 4 578 579 A1**
(43) Date of publication of application: **02.07.2025**
(21) Application number: 24216394.7
(22) Date of filing: 29.11.2024
(51) Int. Cl.: B23C 5/10, B23C 5/20

(54) **CUTTING INSERT AND CUTTING TOOL COMPRISING THE SAME**

(30) Priority: 28.12.2023 JP 2023223128
(71) Applicant: Tungaloy Corporation, Iwaki-shi, Fukushima 970-1144 (JP)
(72) Inventor: SHIROMA, Hikaru, Iwaki-Shi, Fukushima 9701144 (JP)
(74) Representative: Vossius & Partner Patentanwälte Rechtsanwälte mbB

(57) **Abstract**

A cutting insert comprises a first end surface and a second end surface that are each formed in a substantially polygonal plate shape and each include a first long side and a second long side, and a first short side and a second short side that are located between the first long side and the second long side, the first end surface and the second end surface facing each other. The first end surface and the second end surface each have: a first cutting edge extending from the first long side to a first corner part that is located between the first long side and the first short side; and a second cutting edge extending from the second long side to a second corner part located between the second long side and the first short side. A radius of curvature R₃ of a third corner part located on an opposite side of the first corner part with the first long side interposed therebetween is larger than a radius of curvature R₁ of the first corner part.

## Description

### Background

### Field

The present disclosure relates to a cutting insert and a cutting tool comprising the same.

### Description of Related Art

As an end mill which is one type of cutting tool for milling workpieces, those having a cutting insert that is removably mounted on a mounting seat provided on a body of such end mill are known. As an example of such end mill, the applicant has proposed an end mill that includes a plurality of cutting inserts each having a shape that allows itself to be used as both a center edge and a peripheral edge and that further allows itself to be reused by interchanging the front and back sides thereof (see JP2021-030401 A).

An end mill having the above-described conventional cutting insert is an indexable end mill with a double-sided center edge, intended for multifunctional machining, which has advantageous features wherein it is particularly excellent in terms of economic efficiency and the cutting insert can be stably fixed to a body of a cutting tool in comparison with the conventional configuration.

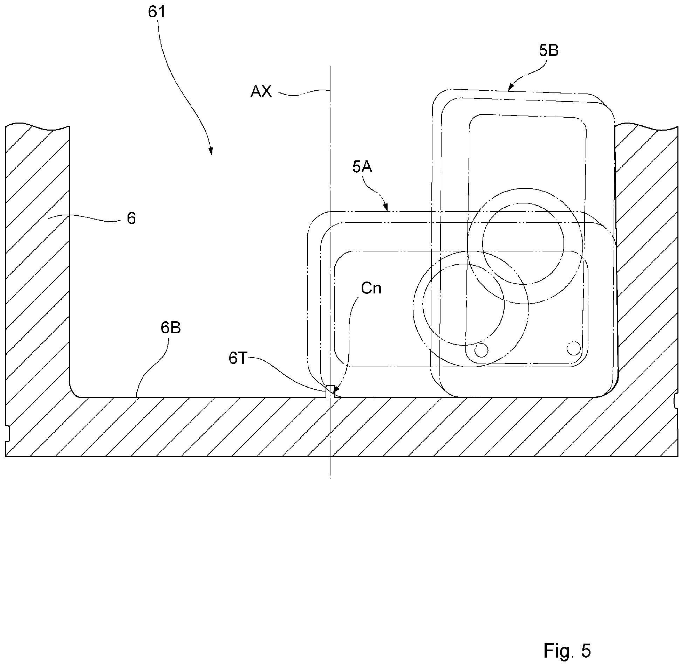

Here, Fig. 5 is a schematic cross-sectional view schematically showing an example of a state in which hole-forming machining (drilling) is performed for a workpiece by using a cutting insert provided to a conventional end mill. This cross-section corresponds to a plane cross-section that includes a rotational axis AX of the end mill (the central axis of a hole 61) in a state in which the hole 61 is being formed in a solid workpiece 6. Fig. 5 also shows the state of arrangement of cutting inserts 5A and 5B. These cutting inserts 5A and 5B have the same shape.

In this case, the cutting insert 5A functions as a center edge which has: an inner edge that extends from a peripheral surface of a body to a rotational axis thereof; and a major cutting edge located on the peripheral surface. On the other hand, the cutting insert 5B functions as a peripheral edge having a major cutting edge located at 180 degrees opposite to the major cutting edge of the center edge. In this way, the cutting inserts 5A, 5B are each formed in a substantially rectangular parallelepiped shape and provided with a center edge and a peripheral edge at an edge portion between a front surface (e.g., an upper surface) and a side surface, and are also provided with a similar center edge and peripheral edge on a back surface (e.g., a lower surface); thus, it can be said that cutting edges which can be used four times in total are provided.

As shown in Fig. 5, when hole-forming machining is performed for a workpiece by using such end mill, a core 6T having, for example, a columnar shape, could be left behind near the center of a worked bottom surface 6B. The core 6T is a portion that is intentionally left undrilled so that the cutting speed by the cutting insert 5A does not become zero at an area near the rotational axis AX. More specifically, by arranging the cutting insert 5A slightly backward in the depth direction from the sheet surface of Fig. 5, the cutting edge does not pass the rotational center (rotational axis AX), thereby resulting in the core 6T being left undrilled. Such core 6T is broken and removed by a corner part Cn provided on the tool center side of the cutting insert 5A, as the hole-forming machining proceeds. At this time, when the cutting insert 5A is designed to be dropped in order to tolerate an axial misalignment, the load generated when the core 6T is removed tends to be excessively high. In addition, according to the findings of the inventors, a manner in which the corner part Cn crushes the core 6T so as to be folded and removed is conceived of as a major machining mechanism for the core 6T. Therefore, in the hole-forming machining for a workpiece, there is a need to improve the machining resistance of the corner part Cn located on the tool center side in the center edge.

### Summary

Under the circumstances set forth above, an object of the present disclosure is to provide a cutting insert whose corner part on the tool center side has an improved machining resistance during hole-forming machining for a workpiece, whereby fracture, etc. of such part can be effectively suppressed, as well as a cutting tool comprising such cutting insert.

In order to achieve the above object, the present disclosure employs the configurations set forth below.
[1] An example of a cutting insert according to the present disclosure includes a first end surface and a second end surface that are each formed in a substantially polygonal plate shape (for example, in general, a rectangular parallelepiped shape) and that each include a first long side and a second long side, and a first short side and a second short side that are located between the first long side and the second long side, the first end surface and the second end surface facing each other. The first end surface and the second end surface each have: a first cutting edge extending from the first long side to a first corner part that is located between the first long side and the first short side; and a second cutting edge extending from the second long side to a second corner part located between the second long side and the first short side. A radius of curvature R₃ of a third corner part located on an opposite side of the first corner part with the first long side interposed therebetween is formed larger than a radius of curvature R₁ of the first corner part.

As described earlier, the core 6T as shown in Fig. 5 may be left behind during hole-forming machining for a workpiece, and such core 6T may be folded and removed by the third corner part located on the tool center side of the center edge. On the other hand, in the present disclosure, when the cutting insert is mounted on the cutting tool with the first corner part and the third corner part being located on the tool periphery side and the tool center side, respectively, the radius of curvature R₃ of the third corner part is formed relatively larger than the radius of curvature R₁ of the first corner part; therefore, the machining resistance against a load that is applied during the removal of the core 6T is improved. Accordingly, it becomes possible to effectively suppress fracture, etc. of the third corner part when hole-forming machining is performed for a workpiece.

[2] More specifically, the cutting insert may further include short side surfaces that face each other, the short side surfaces each being connected to the first end surface and second end surface, the short side surfaces each including the first short side and the second short side. In such case, these short side surfaces may each be inclined with respect to a plane perpendicular to the first end surface and the second end surface. In addition, it is preferable for a clearance angle in the first short side to be a positive angle, and for a clearance angle in the second short side to be a negative angle. It should be noted that, in the present disclosure, the "clearance angle" being a "positive angle" indicates that the internal angle formed by two intersecting surfaces is an "acute angle," whereas the "clearance angle" being a "negative angle" indicates that the internal angle formed by two intersecting surfaces is an "obtuse angle."

[3] In such configuration, it is preferable that the first cutting edge and the second cutting edge of the first end surface and the first cutting edge and the second cutting edge of the second end surface are in a 180-degrees rotationally symmetrical relationship with respect to each other around a predetermined axis virtually extending through the cutting insert.

[4] In such 180-degrees rotationally symmetrical relationship, more specifically, the first corner part in the first end surface and the third corner part in the second end surface may be in a positional relationship of facing each other with the short side surface interposed therebetween, and the third corner part in the first end surface and the first corner part in the second end surface may be in a positional relationship of facing each other with the short side surface interposed therebetween. With such configuration, the cutting insert according to the present disclosure can be used for an end mill intended for multifunctional machining, with the cutting insert being double-sided and indexable. As a result, such cutting insert has the advantage of being excellent in terms of economic efficiency and being able to be stably fixed to a body of a cutting tool.

[5] In the above configuration, the cutting insert may include a chip breaker formed on a rake surface for the first cutting edge, the chip breaker including: a first chip breaker located on the first corner part side with respect to the center of the first long side; and a second chip breaker located on the third corner part side with respect to the center of the first long side. In this case, it is further preferable that the maximum width W_{cmax} of the second chip breaker is larger than the maximum width Wₚₘₐₓ of the first chip breaker. Here, the "width of the chip breaker" in the present disclosure refers to a width in the direction along the first short side in a plan view showing the cutting insert.

In such configuration, since the distance from the first chip breaker that may be located on the tool periphery side to a "wall" becomes relatively short, it becomes easier to forcibly cause the chips to be curled. On the other hand, since the distance from the second chip breaker that may be located on the tool center side to a "wall" becomes relatively long, it becomes more difficult to forcibly cause the chips to be curled. That is to say, this configuration allows a curling process to be easily adjustable as desired according to the thickness of the chips. As a result, it is possible to improve the machining performance of the cutting insert.

[6] In the above configuration, more specifically, it is even more preferable that the maximum width W_{cmax} of the second chip breaker is 50% or less of the length of the first short side, in terms of the point of making it easier to control the shape of chips generated during the hole-forming machining.

[7] An example cutting tool according to the present disclosure is effectively configured so as to include a body and a cutting insert according to the present disclosure which is mounted on a body. More specifically, the cutting insert includes a first end surface and a second end surface that are each formed in a substantially polygonal plate shape and that each include a first long side and a second long side, and a first short side and a second short side that are located between the first long side and the second long side, the first end surface and the second end surface facing each other. The first end surface and the second end surface each have: a first cutting edge including a first corner part located between the first long side and the first short side and extending from the first long side to the first short side; and a second cutting edge including a second corner part located between the second long side and the first short side and extending from the second long side to the first short side. A radius of curvature R₃ of a third corner part located on an opposite side of the first corner part with the first long side interposed therebetween is formed larger than a radius of curvature R₁ of the first corner part.

### Brief Description of Drawings

Fig. 1 is a perspective view schematically showing an entire configuration of a cutting tool according to the present embodiment.
Fig. 2 is a perspective view schematically showing an entire configuration of the cutting tool according to the present embodiment.
Fig. 3 is a perspective view schematically showing a configuration of a cutting insert included in the cutting tool according to the present embodiment.
Fig. 4 is a plan view (top view) schematically showing the configuration of the cutting insert included in the cutting tool according to the present embodiment.
Fig. 5 is a schematical cross-sectional view schematically showing an example of a state in which hole-forming machining is performed on a workpiece using a cutting insert included in a conventional cutting tool.

### Detailed Description

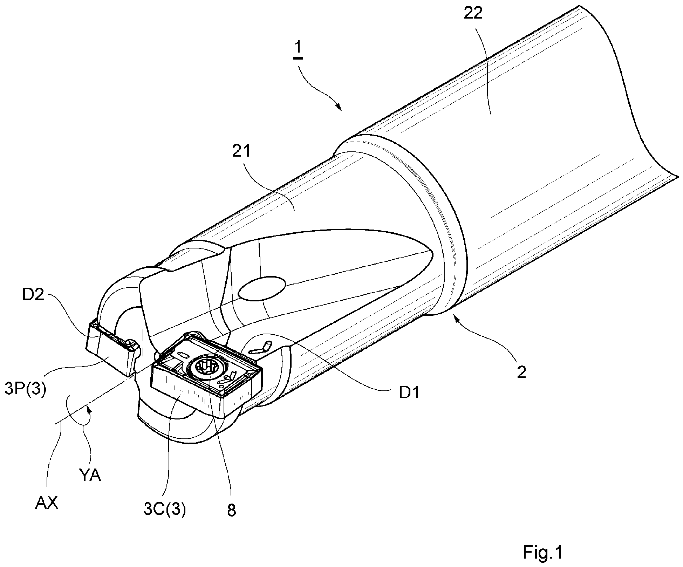

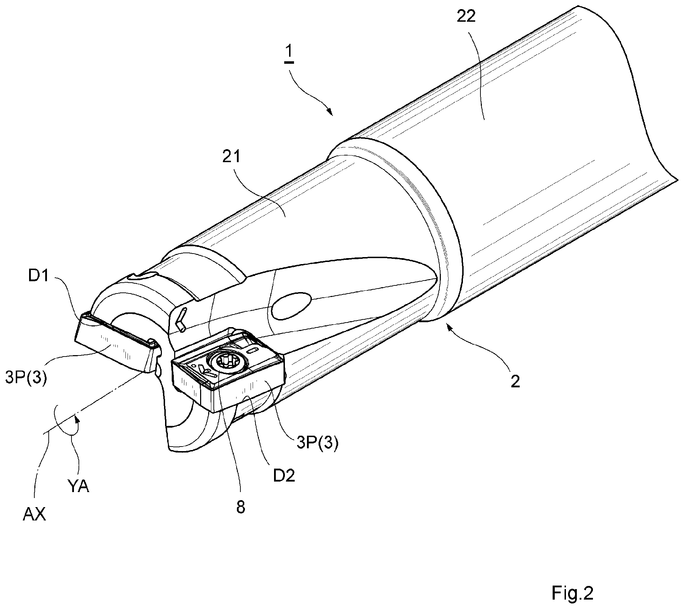

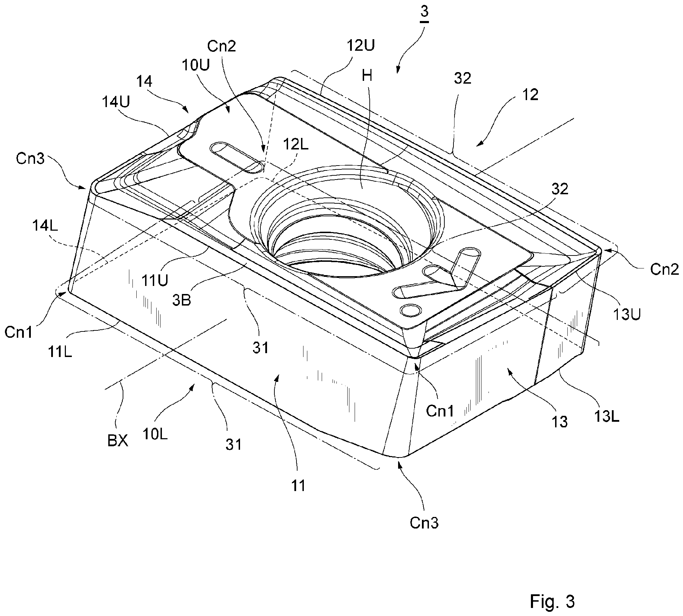

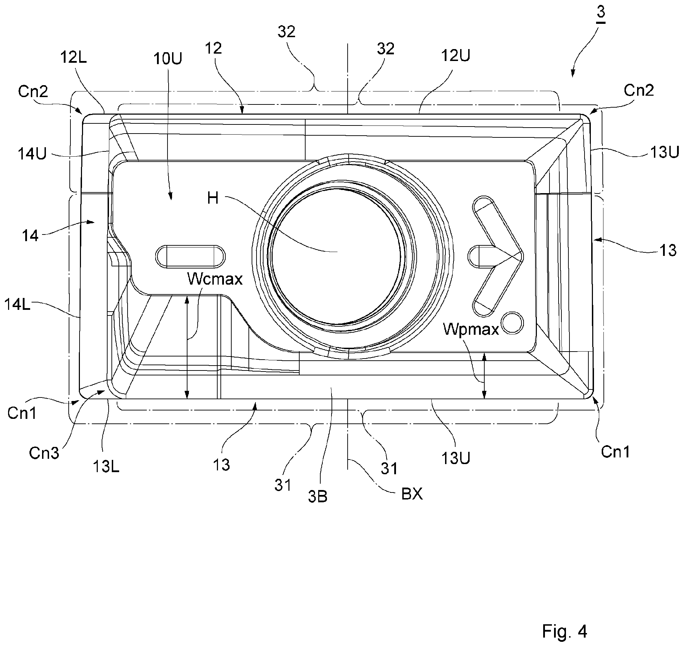

An embodiment of the present disclosure will be described below with reference to the attached drawings. For the purpose of facilitating the understanding of the description, like components will be denoted with like reference numerals in each of the drawings, wherever possible, and redundant description will be omitted. Fig. 1 is a perspective view schematically showing an entire configuration of a cutting tool according to the present embodiment, as viewed from the side of a cutting insert which has been mounted in a later-described first state. Fig. 2 is also a perspective view schematically showing an entire configuration of the cutting tool according to the present embodiment, as viewed from the side of a cutting insert which has been mounted in a later-described second state. Figs. 3 and 4 are a perspective view and a plan view (top view), respectively, which each schematically show a configuration of a cutting insert included in the cutting tool according to the present embodiment.

### <Outline of Cutting Tool 1 >

As shown in Figs. 1 and 2, the cutting tool 1 is an end mill capable of performing hole-forming machining (drilling), in addition to milling, for a workpiece, and the cutting tool 1 is configured by mounting, for example, two cutting inserts 3, 3, as a pair, on a body 2 that is driven so as to be rotated. The body 2 is a member constituting substantially the entire part of the cutting tool 1, and is made of, for example, steel. The body 2 has a leading end part 21 and a trailing end part 22 which are both formed in a substantially cylindrical shape and in an integral manner. The cutting inserts 3, 3 are mounted respectively to insert pockets D1, D2 which are provided in cut-out portions in the leading end part 21. The body 2 is held by a machine tool (not shown) and driven so as to be rotated around a rotational axis AX during machining of a workpiece (not shown). The rotational axis AX coincides with the central axis of the body 2 having a substantially cylindrical shape. In Figs. 1 and 2, the rotational direction YA of the cutting tool 1 during machining is shown as a rounded arrow.

The cutting inserts 3, 3 are each formed in a substantially rectangular parallelepiped shape and have the same shape so as to be interchangeable with each other (see also Figs. 3 and 4 which will be described later). The cutting inserts 3, 3 may be removably (interchangeably) fastened and fixed to both of the insert pockets D1, D2 of the body 2 by using, for example, a screw 8. In addition, as shown in Figs. 1 and 2, the cutting insert 3 that is mounted in a transversely-placed state (first state 3C) in the insert pocket D1 extends along the leading end of the body 2, from the peripheral surface 2P of the body 2 to (or to the vicinity of) the rotational axis AX. On the other hand, the cutting insert 3 that is mounted in a longitudinally-placed state (a state perpendicular to the transversely-placed state; second state 3P) in the insert pocket D2 is located at the peripheral side that is 180 degrees opposite to the cutting insert 3 placed in the first state 3C and extends along the leading end of the body 2, from the peripheral surface 2P of the body 2 to a midpoint to the rotational axis AX.

The material of such cutting insert 3 is not particularly limited, and it is preferable for the entire part of the cutting insert 3 to be made of, for example, cemented carbide. In the cutting insert 3, at least a portion containing a first cutting edge 31 and a second cutting edge 32 (described later) may be formed so as to contain any of, for example: hard materials such as cermet, ceramics and a sintered compact containing cubic boron nitride; a material having a coating layer, formed by PVD or CVD, on a surface of such hard materials; and monocrystal diamond or a sintered compact containing diamond, etc.

### <Specific Configuration of Cutting Insert 3>

Next, a more specific configuration of the cutting inserts 3 will be described below. As shown in Figs. 3 and 4, the cutting insert 3 has a first end surface 10U (the upper surface in the drawings), a second end surface 10L (the lower surface in the drawings), and a first long side surface 11, a second long side surface 12, a first short side surface 13 and a second short side surface 14 that connect the first end surface 10U and the second end surface 10L. Each cutting insert 3 has a mounting hole H formed therethrough in order to fix the cutting insert 3 in the insert pocket D1, D2 by using a screw.

In addition, as shown in Figs. 1 and 2, when the cutting insert 3 is mounted in the first state 3C to the body 2, the second end surface 10L, the second long side surface 12 and the second short side surface 14, or the first end surface 10U, the second long side surface 12 and the first short side surface 13, are portions that abut against, and are thereby restrained into, the insert pocket D1 of the body 2. On the other hand, when the cutting insert 3 is mounted in the second state 3P to the body 2, the second end surface 10L, the first long side surface 11 and the second short side surface 14, or the first end surface 10U, the first long side surface 11 and the first short side surface 13, are portions that abut against, and are thereby restrained into, the insert pocket D2 of the body 2.

The first end surface 10U has a first long side 11U, a second long side 12U, a first short side 13U, and a second short side 14U, that define boundaries between such first end surface 10U and the first long side surface 11, the second long side surface 12, the first short side surface 13 and the second short side surface 14, respectively. Similarly, the second end surface 10L has a first long side 11L, a second long side 12L, a first short side 14L, and a second short side 13L, that define boundaries between such second end surface 10L and the first long side surface 11, the second long side surface 12, the first short side surface 13 and the second short side surface 14, respectively. Due to such characteristics of the configuration, the first cutting edge 31 and the second cutting edge 32 of the first end surface 10U and the first cutting edge 31 and the second cutting edge 32 of the second end surface 10L are 180-degrees rotationally symmetric (i.e., twofold rotational symmetry) with respect to each other around an axis BX that passes through the center of the cutting insert 3 and extends substantially along the first short sides 13U and 14L and the second short sides 14U and 13L. In this way, the axis BX corresponds to an example of "a predetermined axis virtually extending through the cutting insert."

Here, the first cutting edge 31 on the first end surface 10U side includes a first corner part Cn1 located between the first long side 11U and the first short side 13U, and extends from the first long side 11U to the first short side 13U. In the same way, the first cutting edge 31 on the second end surface 10L side includes a first corner part Cn1 located between the first long side 11L and the first short side 14L, and extends from the first long side 11L to the first short side 14L. Each of such first cutting edges 31 function, in the first state 3C, as a cutting edge that primarily cuts a worked bottom surface of a workpiece 6 during the hole-forming machining of such workpiece 6. In addition, as shown in Figs. 1 and 2, when the cutting insert 3 is fixed to the body 2 in the first state 3C, the first corner part Cn1 is located on the tool periphery side, and a third corner part Cn3, which is located on the opposite side of the first corner part Cn1 with the first long side 11U, 11L interposed therebetween, is located on the tool center side (near the rotational axis AX).

In the present embodiment, the radius of curvature R₃ of the third corner part Cn3 is formed relatively larger than the radius of curvature R₁ of the first corner part Cn1. In addition, in the above-described 180-degrees rotationally symmetrical relationship, the first corner part Cn1 on the first end surface 10U and the third corner part Cn3 on the second end surface 10L are in a positional relationship in which they face each other with the short side surface 13 interposed therebetween. The third corner part Cn3 on the first end surface 10U and the first corner part Cn1 on the second end surface 10L are similarly in a positional relationship in which they face each other with the short side surface 14 interposed therebetween.

Meanwhile, the second cutting edge 32 on the first end surface 10U side includes a second corner part Cn2 located between the second long side 12U and the first short side 13U, and extends from the second long side 12U to the first short side 13U. In the same way, the second cutting edge 32 on the second end surface 10L side includes a second corner part Cn2 located between the second long side 12L and the first short side 14L, and extends from the second long side 12L to the first short side 14L. Such second cutting edges 32 each function, in the second state 3P, as a cutting edge that primarily cuts a worked peripheral surface of the workpiece 6 during milling of such workpiece 6.

As shown in Figs. 3 and 4, the first short side surface 13 and the second short side surface 14 are inclined surfaces; more specifically, they are provided so as to be inclined with respect to a plane that is perpendicular to the first end surface 10U and the second end surface 10L. In such configuration, the first short sides 13U, 14L are used as part of the first cutting edge 31 and part of the second cutting edge 32, and a clearance angle in such first short sides 13U, 14L is a positive angle. On the other hand, the second short sides 14U, 13L are not used as the first cutting edge 31 or the second cutting edge 32, and a clearance angle in these second shorted sides 14U, 13L is a negative angle.

Regarding the first cutting edge 31 of the cutting insert 3, the first end surface 10U and the second end surface 10L (which are both rake surfaces) are each provided with a chip breaker 3B. Here, such chip breaker 3B is assumed to have: a virtual portion (first chip breaker) located on the first corner Cn1 side (tool periphery side) with respect to the center of the first long side 11U, 11L; and a virtual portion (second chip breaker) located on the third corner part Cn3 side (tool center side) with respect to the center of the first long side 11U, 11L. In the present embodiment, the maximum width (W_{cmax}) of the second chip breaker is formed so as to be larger than the maximum width (Wₚₘₐₓ) of the first chip breaker. More specifically, the maximum width W_{cmax} is formed so as to be 50% or less (1/2 or less) of the first short side 13U, 14L.

According to the cutting inserts 3, 3 configured as described above, as well as the cutting tool 1 on which such cutting inserts 3, 3 are mounted, the cutting inserts 3 functions as an end mill intended for multifunctional machining being double-sided and indexable. Each of the cutting inserts 3, 3 is reusable by inverting the first end surface 10U and the second end surface 10L, and the cutting inserts 3, 3 are also interchangeable; therefore, a single cutting insert 3 can be used four times in total. Accordingly, it is possible to improve the economic efficiency of the tool and facilitate inventory control of products.

In addition, the radius of curvature R₃ of the third corner part Cn3 that may be located on the tool center side is formed so as to be relatively larger than the radius of curvature R₁ of the first corner part Cn1 that may be located on the tool periphery side. With such configuration, when the core 6T as shown in Fig. 5 that could be left behind during the hole-forming machining of the workpiece 6 is folded and removed by using the third corner part Cn3 of the cutting insert 3 that is mounted in the first state 3C, it is possible to significantly improve the machining resistance of such corner part. Accordingly, it is possible to effectively suppress the fracture, etc. of the third corner part Cn3 during the hole-forming machining for the workpiece 6.

Furthermore, the maximum width W_{cmax} of the second chip breaker that is located on the third corner part Cn3 side with respect to the center of the first long side 11U, 11L is formed so as to be larger than the maximum width Wₚₘₐₓ of the first chip breaker that is located on the first corner part Cn1 side with respect to the center of the first long side 11U, 11L. With such configuration, in the first chip breaker that may be located on the tool periphery side, since the distance to a "wall" is relatively short, it becomes easier to forcibly cause the chips to be curled. On the other hand, in the second chip breaker that may be located on the tool center side, since the distance to the "wall" is relatively large, it becomes more difficult to forcibly cause the chips to be curled. In other words, such configuration is advantageous in that a curling process for chips can be easily adjusted as desired according to the thickness of the chips. As a result, it is possible to further improve the overall machining performance of the cutting insert 3.

Although the present embodiment has been described above with reference to the specific examples, such description has been provided in order to facilitate the understanding of the present disclosure, instead of limiting the interpretation of the present disclosure. More specifically, the present disclosure is not limited to the specific examples, and design modifications that are added as appropriate by a person skilled in the art are also encompassed in the scope of the present disclosure, as long as such design modifications include the characteristics of the present disclosure. In addition, each element, arrangement, material, condition, shape, dimension, scale, etc. included in each of the above-described specific examples is not particularly limited to those described as examples, unless otherwise indicated, and they may be altered as appropriate. Furthermore, regarding each of the elements included in each of the above-described specific examples, different combinations thereof may be employed, as long as no technical contradiction occurs.

More specifically, the cutting insert 3 may not be useable both in the first state 3C and the second state 3P, as long as at least the first cutting edge 31 having the first corner part Cn1 and the third corner part Cn3 is formed and the relationship of the radius of curvature R₃ > the radius of curvature R₁ is satisfied. Further, the leading end part 21 and the trailing end part 22 of the body 2 may be formed as separate parts, and they may be configured as an assembly type or a head-replaceable type, or they may be coupled by welding, etc. In addition, multiple insert pockets D1, D2 may be provided, and multiple cutting inserts 3 may be mounted to the respective insert pockets. Furthermore, as a method of mounting the cutting inserts 3 to the insert pockets D1, D2, a screw-on method or a lever-lock method may be employed; however, the mounting method is not particularly limited thereto and, for example, brazing may be employed. The pitch for arranging the plurality of cutting inserts 3 is not limited to a regular pitch, and the cutting inserts 3 may be arranged at an irregular pitch. Furthermore, when the cutting inserts 3 are used for milling, the chip breaker 3B can be formed mainly in order to provide a positive rake surface and, in such case, the chip breaker 3B does not have to be intended to cause chips to hit against a "wall" to break them into fine pieces.

In addition, it is only necessary that the first cutting edge 31 on the first end surface 10U side extends from the first long side 11U to the first corner part Cn1, and it does not necessarily have to be formed so as to extend to the first short side 13U. In addition, it is only necessary that the first cutting edge 31 on the second end surface 10L side extends from the first long side 11L to the first corner part Cn1, and it does not necessarily have to be formed so as to extend to the first short side 14L. Similarly, it is only necessary that the second cutting edge 32 on the first end surface 10U side extends from the second long side 12U to the second corner part Cn2, and it does not necessarily have to be formed so as to extend to the first short side 13U. In addition, it is only necessary that the first second edge 32 on the second end surface 10L side extends from the second long side 12L to the second corner part Cn2, and it does not necessarily have to be formed so as to extend to the first short side 14L. In other words, the first short sides 13U, 14L may not be used as part of the first cutting edge 31 or the second cutting edge 32.

According to the present disclosure, it is possible to improve the machining resistance of the third corner part of the cutting insert, and as a result, it is possible to effectively suppress fracture, etc. of the third corner part during hole-forming machining for a workpiece.

## Claims

1. A cutting insert, comprising:
a first end surface and a second end surface that are each formed in a substantially polygonal plate shape and that each include a first long side and a second long side, and a first short side and a second short side that are located between the first long side and the second long side, the first end surface and the second end surface facing each other,
wherein the first end surface and the second end surface each have: a first cutting edge extending from the first long side to a first corner part that is located between the first long side and the first short side; and a second cutting edge extending from the second long side to a second corner part located between the second long side and the first short side, and
wherein a radius of curvature R₃ of a third corner part located on an opposite side of the first corner part with the first long side interposed therebetween is formed larger than a radius of curvature R₁ of the first corner part.

2. The cutting insert according to claim 1, further comprising short side surfaces that face each other, the short side surfaces each being connected to the first end surface and second end surface, the short side surfaces each including the first short side and the second short side, wherein:
the short side surfaces are each inclined with respect to a plane perpendicular to the first end surface and the second end surface;
a clearance angle in the first short side is a positive angle; and
a clearance angle in the second short side is a negative angle.

3. The cutting insert according to claim 1 or 2, wherein the first cutting edge and the second cutting edge of the first end surface and the first cutting edge and the second cutting edge of the second end surface are in a 180-degrees rotationally symmetrical relationship with respect to each other around a predetermined axis virtually extending through the cutting insert.

4. The cutting insert according to any one of claims 1 to 3, wherein, in the 180-degrees rotationally symmetrical relationship, the first corner part in the first end surface and the third corner part in the second end surface are in a positional relationship of facing each other with the short side surface interposed therebetween, and the third corner part in the first end surface and the first corner part in the second end surface are in a positional relationship of facing each other with the short side surface interposed therebetween.

5. The cutting insert according to any one of claims 1 to 4, further comprising a chip breaker formed on a rake surface for the first cutting edge, the chip breaker including: a first chip breaker located on a side of the first corner part with respect to a center of the first long side; and a second chip breaker located on a side of the third corner part with respect to the center of the first long side,
wherein a maximum width W_{cmax} of the second chip breaker is larger than a maximum width Wₚₘₐₓ of the first chip breaker.

6. The cutting insert according to claim 5, wherein the maximum width W_{cmax} of the second chip breaker is 50% or less of a length of the first short side.

7. A cutting tool, comprising:
a body; and
a cutting insert mounted on the body
wherein the cutting insert includes a first end surface and a second end surface that are each formed in a substantially polygonal plate shape and that each include a first long side and a second long side, and a first short side and a second short side that are located between the first long side and the second long side, the first end surface and the second end surface facing each other,
wherein the first end surface and the second end surface each have: a first cutting edge extending from the first long side to a first corner part that is located between the first long side and the first short side; and a second cutting edge extending from the second long side to a second corner part located between the second long side and the first short side, and
wherein a radius of curvature R₃ of a third corner part located on an opposite side of the first corner part with the first long side interposed therebetween is formed larger than a radius of curvature R₁ of the first corner part.
